Europäisches Patentamt

European Patent Office

Office européen des brevets

(11) Publication number: **0 275 846**
**A1**

## (12) EUROPEAN PATENT APPLICATION

(21) Application number: **87850014.9**

(22) Date of filing: **21.01.87**

(51) Int. Cl.⁴: **B01D 53/34** , B01D 53/14 , F23J 15/00 , F28C 3/06

(43) Date of publication of application:
**27.07.88 Bulletin 88/30**

(84) Designated Contracting States:
**AT BE CH DE FR GB GR LI NL SE**

(71) Applicant: **Johansson, Ulf**
**Sjunde Villagatan 25**
**S-502 44 Borås(SE)**

(72) Inventor: **Johansson, Ulf**
**Sjunde Villagatan 25**
**S-502 44 Borås(SE)**

(74) Representative: **MacFie, W.R. et al**
**Albihn West AB Stora Nygatan 15**
**S-411 08 Göteborg(SE)**

(54) **Means for treating combustion gases.**

(57) A means for reclaiming residual heat from combustion gases, while simultaneously cleaning the same comprises a water-filled container (11) to which a conduit (10) is connected, and which, in use, is maintained at subatmospheric pressure by means of a fan (17). The combustion gas conduit (10) enters the lower portion of the container, within the tubular guide member (12) in the latter. Devices (13, 14, 15) aid in forming the out-flowing gas into a multitude of small bubbles, which will be well washed from entrained particles and sulphur compound by the water in the container. A heat exchanger (16) within the guide member (12) reclaims the heat transferred from the bubbles to the water.

Means (22-27) are connected to the container for automatically metering out a neutralizing agent to the water therein.

# MEANS FOR TREATING COMBUSTION GASES

Combustion gases from furnaces, especially from furnaces where oil is burnt, often contains sulphur compounds, and for practical reasons the gases are not cooled to a temperature where condensation of moisture in the gases will occur.

The latter means that a noticeable amount of heat will be lost. The outflow of unpurified gases further causes environmental problems, and the sulphur compounds may cause corrosion damages to heat absorbing surfaces, and to the chimney.

The object of the present invention is to propose means which, at a reasonable cost, will permit an efficient purification of the gases and a reclaiming of residual heat therein.

It has already been proposed to let the gases pass through a container which is partly filled with water and, in use, is maintained at sub-atmospheric pressure by means of a fan. The distribution of the gases in the water has, however, not been satisfactory, which has resulted in a bad contact between gas and water, causing an unsufficient purification of the gases, low heat transfer to the water, and acid condensate flow to the drain.

The invention is characterized in a tubular guide member, located within the container and enclosing a heat exchanger, the lower end of the guide member communicating with the water in the container a supply conduit for the combustion gases, forming part of a water trap and terminating within the guide member, and a perforated plate at the upper end of the guide member.

In order to obtain a better distribution of the gases within the tubular guide member and to calm the gas movements therein, a second perforated plate is preferably located within the guide member between the mouth of the supply conduit and the heat exchanger.

Possible sulphur compounds in the gases will dissolve in the cooler and in order to avoid corrosion damages, in the first hand upon the heat exchanger, means for supplying a neutralizing agent to the water in the container is provided. This comprises a receptacle connected to a supply of pressurized water and holding an excess of an easily soluble neutralizing agent, the water supply conduit including a time delay for periodically supplying pressurized water to the receptacle, which, in turn, is connected to the container. This will, together with normal upkeep, automatically ensure a correct metering of neutralizing agent to the container.

There may still remain some un-condensed moisture in the gases having passed through the water, and in order to ensure condensation of such moisture, and thereby to reclaim the last residual heat as well as to reduce condensation in the chimney a conduit is advantageously connected to supply cool air from the surroundings to the gas effluent from the container, upstream of the fan.

In order to augment the rising capacity of the gases, and for eliminating the risk of possible residual condensation a conduit is advantageously provided for supplying the spent cooling air from the motor driving the fan to the gas effluent, upstream of the cold air supply conduit.

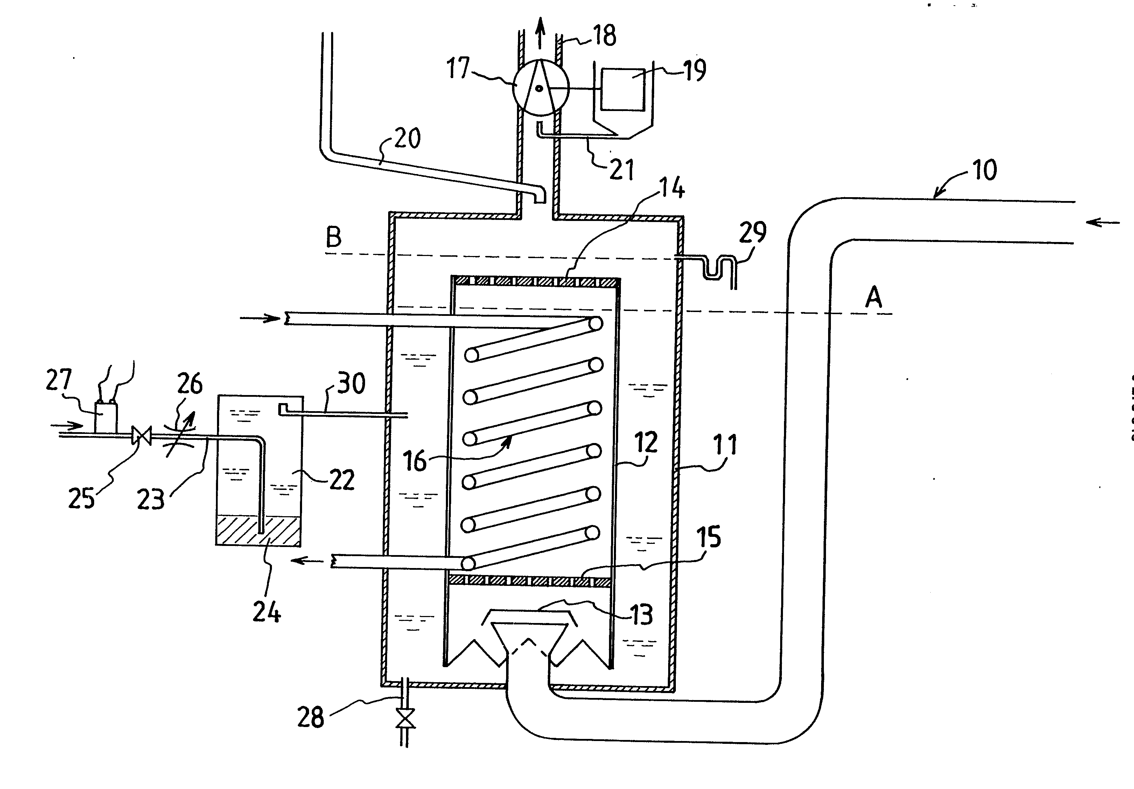

The invention will below be described with reference to the accompanying drawing, which - schematically shows the invention as used with a conventional furnace, not shown.

A conduit 10 transfer combustion gases from a furnace, where sulphur containing oil is burnt, to a container 11, which is almost filled with water. Within the container a tubular guide member 12 is fitted in vertical position. The guide member 12 is open downwards, and may, as the container 11, have arbitrary cross section. The combustion gas conduit 10 extends into the lower end of the guide member, and its mouth 13 is formed to facilitate distribution of the gases in the water. It is desirable that a multitide of small bubbles are obtained, so an intimate contact between gas and water occurs.

The guide member is upwards partly closed by a perforated plate 14 which dampenes and distributes the gas expulsion from the guide member. A second perforated plate 15 is fitted just above the mouth of the gas conduit 10, which further aids in distributing the gas bubbles.

An intense, but controlled movement will occur in the water within the guide member 12, which determines the heat transfer to a heat exchanger, on this occasion a tube coil 16, within the guide member. The heat exchanger can be used for heating consumption water, or for other purposes.

The combustion gas conduit 10 extends from the furnace at a high level in relation to the container, and its connection to the latter is formed as a water trap (level A), which means that the terminal part of the conduit will be filled with water, when the burner of the furnace is not operating.

A fan 17 is mounted in the gas effluent 18 from the container. The motor 19 driving the fan is, in a manner not shown here, connected to the motor driving the burner, so it will start simultaneously with, or preferably slightly before the burner motor.

The sub-atmospheric pressure caused by the fan within the container will raise the water level therein (to level B), and will remove substantially all water from the gas conduit, so the gases can flow out within the guide member. The many small bubbles which will rise within the guide member, will be efficiently washed with respect to solid particles and sulphur compounds, and will give up their heat content to the water.

The combustion gases having passed through the water may still contain some moisture, and to ensure condensation thereof, a conduit 20 is connected to the gas effluent 18, to supply cold air from the surroundings, upstream of the fan 17. In a domestic boiler the combustion intensity will have to be increased, when the exterior temperature sinks. This results in an automatic adjustment of the cooling influence upon an increased gas volume/temperature.

The gases which have now been repeatedly cooled have very small rising capacity of their own to aid the fan in forcing the gases up the chimney. The fan work will mean an increased temperature due to frictional heat, but by conducting the cooling air from the fan motor to the effluent conduit 18 it is possible considerably to reduce the risk of moisture condensation in the chimney and to increase the rising capacity of the gases.

A conduit 21 transfers heated air from the motor 19 to the effluent conduit, and enters upstream of the cold air conduit 20.

The sulphur compounds which have been dissolved in the water in the container will have to be neutralized one way or the other. It has been proposed to introduce pieces of some metal to be consumed in the water, and various devices have been proposed for metering a neutralizing agent to the container. Hitherto used arrangements have either presupposed comparatively extensive material, or made a careful control of the supply or pH measurement with calibration of sensors necessary.

According to a development of the invention a closed receptacle 22 is via a pipe 23 connected to a source of pressurized water. The receptacle 22 contains an excess of an easily soluble neutralizing agent 24, for instance sodium bicarbonate, which is cheap and easily available.

The receptacle is always filled with water and the excess of neutralizing agent rests as a sediment upon the bottom of the receptacle. The pipe 23 includes a shut-off valve 25, a reducing valve 26 and an adjustable time relay 27.

The latter can, for instance, be timed to hold the water supply conduit 23 open two seconds each minut, which means that a very small quantity of water with the neutralizing agent dissolved therein will be transferred to the container 11, through a connection 30. The latter starts from the upper region of the receptacle, whereas the supply conduit 23 is bent within the receptacle and reaches to the bottom thereof. On each occasion when water is supplied a churning of the sediment occurs so the dissolving of further agent is promoted.

The products of neutralization, as well as particles washed from the gases will settle at the bottom of the container. The movements in the water are rather forceful within the guide member, but the movements outside the latter are moderate, which facilitates the settling. The bottom sediment can be withdrawn intermittently by way of a conduit 28.

The condensation of moisture in the gases will mean a steady increase in the water volume within the container, but a continuous withdrawal occurs by way of the water trap 29.

The embodiment described above and shown in the drawing is an example only, the details of which can be modified in many ways within the scope of the appended claims. The heating coil 16 can thus be substituted by arbitrary known kind of heat exchanger.

**Claims**

1. Means for reclaiming residual heat from combustion gases while simultaneously purifying the same, in which the gases are brought to pass a container (11) partly filled with water and, in use, being maintained at sub-atmospheric pressure by means of a fan (17),
**characterized** by,
a tubular guide member (12), located within the container (11) and enclosing a heat exchanger (16), the lower end of the guide member communicating with the water in the container,
a supply conduit (10) for the combustion gases, forming part of a water trap and terminating within the guide member (12), and
a perforated plate (14) at the upper end of the guide member (12).

2. Means according to claim 1, **characterized** in a second perforated plate (15) within the guide member (12) between the mouth of the supply conduit (10) and the heat exchanger (16).

3. Means according to either of the preceding claims, **characterized** in means for supplying a neutralized agent to the water in the container (11) and comprising a receptacle (22) connected to a supply (23) of pressurized water and holding an excess of an easily soluble neutralized agent (24), the water supply conduit (23) including a time relay (27) for periodically supplying pressurized water to the receptacle (22), which, in turn, is connected to the container (11).

4. Means according to any of the preceding claims, **characterized** in a conduit (20) for supplying cool air from the surroundings to the gas effluent (18) from the container (11), upstream of the fan (17).

5. Means according to claim 4, **characterized** in a conduit (21) for supplying the spent cooling air from the motor (19) driving the fan (17) to the gas effluent, upstream of the cold air supply conduit (20).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-B-1 201 856 (M. SIEBKER) <br> * Page 1, column 1, line 1 - page 2, column 4, line 4; figures 1,2 * | 1,2 | B 01 D 53/34 <br> B 01 D 53/14 <br> F 23 J 15/00 <br> F 28 C 3/06 |
| Y | | 3 | |
| X | US-A-3 060 921 (W.S. LURING) <br> * Page 1, column 2, line 17 - page 2, column 4, line 2; figure 1 * | 1,2 | |
| Y | | 3 | |
| X | DE-A-3 520 865 (H. HÄNGEL) <br> * Pages 1-3, claims 1-14; figure 1 * | 1,2 | |
| Y | | 3 | TECHNICAL FIELDS SEARCHED (Int. Cl.4) <br><br> B 01 D <br> F 23 J <br> F 28 C <br> F 24 H |
| Y | BETRIEB UND ENERGIE, vol. 91, no. 3, June 1985, page 33, Resch-Verlag, Gräfeling, DE; "Energiesparend und umweltschonend" <br> * Whole article * | 3 | |

-/-

The present search report has been drawn up for all claims

| Place of search | Date of completion of the search | Examiner |
|---|---|---|
| THE HAGUE | 03-09-1987 | PYFFEROEN K. |

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl.4) |
|---|---|---|---|
| Y | EP-A-0 151 431 (W. DÜRRENBERGER) * Pages 1-3, claims 1-13; figure 1 * | 3 | |
| A | GB-A- 759 062 (SUBMERGED COMBUSTION CO. OF AMERICA) | | |
| A | DE-C- 663 506 (GEORG NARTEN) | | |

TECHNICAL FIELDS SEARCHED (Int. Cl.4)

The present search report has been drawn up for all claims

| Place of search | Date of completion of the search | Examiner |
|---|---|---|
| THE HAGUE | 03-09-1987 | PYFFEROEN K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82